# EUROPÄISCHE PATENTANMELDUNG

(11) **EP 1 690 442 A1**
(43) Veröffentlichungstag der Anmeldung: **16.08.2006**
(21) Anmeldenummer: 05024257.7
(22) Anmeldetag: 08.11.2005
(51) Int. Cl.: A01C 23/04, B01F 5/04

(54) **Dosiereinheit für Boden- oder Pflanzenverbesserungsmittel**

(30) Priorität: 15.02.2005 DE 202005002496 U
(71) Anmelder: Tisatec GmbH, 64560 Riedstadt (DE)
(72) Erfinder: Prutzer, Hans-Joachim, 64569 Nauheim (DE); Shaw, Peter, 82544 Neufahrn (DE); Simoneit, Manfred, 75365 Calw-Stammheim (DE)
(74) Vertreter: KEIL & SCHAAFHAUSEN Patentanwälte

(57) **Zusammenfassung**

Die Erfindung betrifft eine Dosiereinheit (1) für Boden- oder Pflanzenverbesserungsmittel, insbesondere für Netzmittel zur Steigerung der Wasseraufnahmefähigkeit des Bodens, mit einem ersten, mit einer Bewässerungsleitung verbindbaren Einlassanschluss (2), einem zweiten, mit der Bewässerungsleitung verbindbaren Auslassanschluss (3), einem zwischen dem Einlassanschluss und dem Auslassanschluss verlaufenden Strömungskanal (5) und einem Bypasskanal, der in Fließrichtung von dem Strömungskanal abzweigt. Der Bypasskanal führt in eine Mischkammer zum Zumischen eines Boden- oder Pflanzenverbesserungsmittels und mündet aus dieser wieder in den Strömungskanal. Um ein exaktes Zumischen eines Boden- oder Pflanzenverbesserungsmittels zu ermöglichen, ist in dem Strömungskanal (5) ein Dosierventil (6) vorgesehen, durch welches gleichzeitig die Durchflussmenge durch den Strömungskanal (5) und die Durchflussmenge durch den Bypasskanal regelbar ist.

## Beschreibung

Die Erfindung betrifft eine Dosiereinheit für Boden- oder Pflanzenverbesserungsmittel, insbesondere für Netzmittel zur Steigerung der Wasseraufnahmefähigkeit des Bodens, mit einem ersten, mit einer Bewässerungsleitung verbindbaren Einlassanschluss, einem zweiten, mit der Bewässerungsleitung verbindbaren Auslassanschluss, einem zwischen dem Einlassanschluss und dem Auslassanschluss verlaufenden Strömungskanal und einem Bypasskanal, der in Fließrichtung von dem Strömungskanal abzweigt, in eine Mischkammer zum Zumischen eines Boden- oder Pflanzenverbesserungsmittels führt und aus dieser wieder in den Strömungskanal mündet.

Sport- oder Golfplätze, Parkanlagen oder dgl. werden häufig zur Verbesserung des Rasenwachstums künstlich bewässert. Gerade nach großer Trockenheit ist die Wasseraufnahmefähigkeit des Bodens nicht ausreichend, um die von einer Bewässerungs- und Beregnungsanlage verteilte Wassermenge rasch aufzunehmen. Es ist daher bekannt, vor oder während der Beregnung ein Netzmittel auf den Boden aufzubringen, durch welches die Oberflächenspannung des Bodens reduziert und dadurch dessen Wasseraufnahmefähigkeit verbessert wird. Das individuelle Aufbringen eines Netzmittels mit einer Gießkanne oder dgl. ist jedoch insbesondere bei großen Sport- oder Golfplätzen und Parkanlagen sehr zeitintensiv.

Aus der DE 248 486 ist ein in eine Druckwasserleitung einzuschaltendes Zwischenstück zur Mischung des Wassers für Beregnungsanlagen mit Dünger bekannt. Das Zwischenstück weist einen Strömungskanal und einen parallel zu diesem geschalteten Bypasskanal auf, welcher durch einen Behälter geleitet wird, in welchem ein Einsatzsieb für den Dünger vorgesehen ist, so dass der Dünger allmählich in Lösung gebracht wird, wenn das Wasser durch den Behälter geleitet wird. Um die Menge des dem Beregnungswasser zugemischten Düngemittels zu steuern, sind jeweils am Eingang und am Ausgang des Strömungskanals und des Bypasskanals Absperrventile angeordnet. Zur Dosierung der dem Wasser zuzumischenden Düngermenge sind folglich vier verschiedene Ventile manuell zu betätigen, was als aufwendig empfunden wird.

Weiter wird in der EP 0 753 254 B1 ein Verbesserungssystem mit einer einen Filter enthaltenden Bewässerungszufuhrleitung vorgeschlagen. In dem Filter sind Filterelemente angeordnet, die aus einem mit Herbizid imprägnierten Material gebildet sind. Der Filter ist dabei in einem Bypasskanal angeordnet, der von der Hauptwasserleitung abzweigt. Sowohl in der Hauptwasserleitung als auch in dem Bypasskanal sind mehrere bspw. zentral ansteuerbare Magnetventile vorgesehen, um die Durchflussmenge durch die Hauptwasserleitung und die Menge des zudosierten Herbizids steuern zu können. Dies erfordert einen hohen Reglungsaufwand. Zudem kann durch den Ausfall eines einzigen Ventils die Funktion der gesamten Dosiereinheit gestört werden, so dass dieses bekannte Bewässerungssystem vergleichsweise störanfällig ist.

Aufgabe der vorliegenden Erfindung ist es demgegenüber, eine Dosiereinheit der eingangs genannten Art und eine Bewässerungsanlage zu schaffen, die ein exaktes Zumischen eines Boden- oder Pflanzenverbesserungsmittels ermöglicht und gleichzeitig einfach bedienbar und wenig störanfällig ist.

Diese Aufgabe wird erfindungsgemäß im Wesentlichen dadurch gelöst, dass in dem Strömungskanal ein Dosierventil vorgesehen ist, durch welches gleichzeitig die Durchflussmenge durch den Strömungskanal und die Durchflussmenge durch den Bypasskanal regelbar ist. Für eine definierte Zumischung bspw. eines Netzmittels zur Steigerung der Wasseraufnahmefähigkeit des Bodens muss folglich nur noch ein Ventil vorgesehen werden, wodurch nicht nur der Bedienungskomfort und der Regelungsaufwand verbessert wird, sondern auch die Herstellungskosten gegenüber bekannten Systemen mit mehreren Ventilen gesenkt werden können.

Nach einer bevorzugten Ausführungsform der Erfindung weist das Dosierventil eine erste Verschlussscheibe auf, die derart an die Innenkontur des Strömungskanals angepasst ist, dass die erste Verschlussscheibe durch eine Drehung um 90° aus einer einen Durchflusskanal zumindest im Wesentlichen sperrenden Verschlussstellung in eine einen Durchfluss durch den Strömungskanal zumindest nicht wesentlich behindernden Öffnungsstellung bzw. umgekehrt überführbar ist. In Weiterbildung dieses Erfindungsgedankens ist es vorgesehen, dass der Strömungskanal von der Mischkammer durch eine Wand getrennt ist, in welcher zwei Öffnungen vorgesehen sind, die die beiden Enden des Bypasskanals bilden. Dabei weist das Dosierventil vorzugsweise eine zweite Verschlussscheibe auf, durch die wenigstens eine der beiden Öffnungen öffenbar und verschließbar ist. Durch diese Ausgestaltung des Dosierventils ist es möglich, sowohl die Durchflussmenge durch den Strömungskanal als auch die Durchflussmenge durch den Bypasskanal mit nur einem Dosierventil zu regeln.

Wenn die erste und die zweite Verschlussscheibe derart miteinander gekoppelt sind, dass die zweite Verschlussscheibe in der Öffnungsstellung der ersten Verschlussscheibe einen Durchfluss durch den Bypasskanal zumindest im Wesentlichen sperrt und in der Verschlussstellung der ersten Verschlussscheibe ein Durchfluss durch den Bypasskanal zumindest nicht wesentlich behindert, kann zur Steigerung der Menge des dem Wasser zugemischten Boden- oder Pflanzenverbesserungsmittels die Durchflussmenge durch den Strömungskanal verringert und die Durchflussmenge durch den Bypasskanal gesteigert werden. Umgekehrt kann zur Verringerung der Menge des dem Wasser beigemischten Netzmittels oder dgl. der Bypasskanal auch ganz oder teilweise verschlossen werden, so dass das Wasser im Wesentlichen nur durch den Strömungskanal fließt.

Der Aufbau der erfindungsgemäßen Dosiereinheit kann dadurch besonders kompakt gehalten werden, dass die Mischkammer durch ein insbesondere zylindrisches Gehäuse gebildet wird, in welchem ein bspw. zentral angeordnetes Steigrohr vorgesehen ist, welches mit dem Strömungskanal verbindbar ist, und das zusammen mit dem Gehäuse einen ringförmigen Bereich der Mischkammer definiert. Das aus dem Strömungskanal abgezweigte Wasser fließt somit zunächst durch das Steigrohr und daran anschließend durch den ringförmigen Bereich der Mischkammer, in welchem bspw. eine ebenfalls ringförmig gestaltete Tablette eines Netzmittels oder dgl. aufgenommen ist. Hierdurch wird das Netzmittel allmählich aufgelöst und zusammen mit dem durch den Bypasskanal strömenden Wasser wieder in den Strömungskanal zurückgeführt.

Die Handhabung der erfindungsgemäßen Dosiereinheit lässt sich weiter verbessern, wenn dem Dosierventil ein Betätigungselement zugeordnet ist, welches eine Antriebsstange aufweist, die sich durch das Steigrohr erstreckt. Zur manuellen Betätigung kann das Dosierventil mit einem Handgriff verbunden sind, dem bspw. eine Anzeigeeinrichtung und/oder eine Skalierung zugeordnet ist. Die eingestellte Dosiermenge lässt sich so auf einen Blick ablesen und ggf. durch eine Drehung des Handgriffs verändern. Alternativ oder zusätzlich hierzu ist es auch möglich, zur motorischen Betätigung des Dosierventils einen Motor, ein Stellglied oder dgl. vorzusehen. Hierdurch kann die erfindungsgemäße Dosiereinheit auch durch eine zentrale Computeranlage angesteuert werden.

Vorzugsweise ist in der Mischkammer ein bspw. ringförmiger Rost vorgesehen, auf welchen insbesondere ringförmige Tabletten eines Netzmittels oder dgl. derart aufsetzbar sind, dass diese von einem durch den Bypasskanal strömenden Fluid, wie Wasser, umspült und langsam aufgelöst werden. Der Greenkeeper eines Golfplatzes muss daher lediglich von Zeit zu Zeit ringförmige Tabletten des Boden- oder Pflanzenverbesserungsmittels, die insbesondere an die Gestaltung der Mischkammer angepasst sind, in die Dosiereinheit nachfüllen. Das Netzmittel kann dann gleichzeitig mit dem Beregnungswasser durch einen oder mehrere Regner auf die Grünflächen aufgebracht werden.

Alternativ hierzu ist es auch möglich, dass von dem Bypasskanal eine Leitung abzweigt, die mit einem Behälter für ein fließfähiges Boden- oder Pflanzenverbesserungsmittel derart verbunden ist, dass durch den Fluiddruck in der Leitung das fließfähige Boden- oder Pflanzenverbesserungsmittel über eine Einspeisleitung in den Bypasskanal eingebracht wird. Dies kann mit besonders einfachen Mitteln dadurch erfolgen, dass in dem Behälter ein Kolben verschiebbar angeordnet ist, der den Behälter in eine erste Kammer, in welche die Leitung mündet, und eine zweite Kammer, aus welcher die Einspeisleitung abzweigt, unterteilt. Der Kolben kann dabei auf seiner der ersten Kammer zugewandten Seite eine größere wirksame Kolbenfläche aufweisen als auf seiner der zweiten Kammer zugewandten Seite. Da zudem der Fluiddruck in der Leitung zumindest geringfügig höher als in der Einspeisleitung ist, wird die zweite Kammer, in welcher das flüssige Netzmittel oder dgl. aufgenommen ist, durch eine langsame Verschiebung des Kolbens allmählich geleert, so dass das Netzmittel in der Mischkammer dem durch den Bypasskanal strömenden Wasser beigemischt wird. Zum Befüllen des Behälters muss der Kolben lediglich wieder zurückgeschoben werden, so dass die erste Kammer entleert wird.

Das Entleeren bzw. Be- oder Entlüften der Mischkammer kann dadurch erleichtert werden, dass im vertikal unteren Bereich der Mischkammer ein Entleerventil und/oder im vertikal oberen Bereich der Mischkammer ein Belüftungsventil vorgesehen ist.

Wenn das Gehäuse der Mischkammer durch einen auf dieser insbesondere durch eine Verschraubung lösbar befestigten Decke verschlossen ist, ist das Befüllen der Mischkammer bspw. mit ringförmigen Tabletten des Netzmittels besonders einfach möglich.

Die der Erfindung zugrunde liegende Aufgabe wird zudem durch eine Bewässerungsanlage mit einer Wasserleitung und wenigstens einem an diese angeschlossenen Regner oder dgl. gelöst, dem ein insbesondere zentral ansteuerbares Ventil vorgeschaltet ist, wobei in Strömungsrichtung hinter dem Ventil eine Dosiereinheit der eingangs genannten Art in der Wasserleitung angeordnet ist. Das Ventil kann bei einer Blocksteuerung der Bewässerungsanlage ein zentral angesteuertes Magnetventil sein, welches in der Hauptwasserleitung angeordnet ist. Durch die Anordnung der Dosiereinheit hinter dem Ventil ist eine Be- oder Entlüftung der Dosiereinheit möglich. Im drucklosen Zustand läuft die Dosiereinheit folglich leer, so dass sich bspw. eine in dieser aufgenommene Netzmitteltablette nur dann auflöst, wenn tatsächlich Wasser durch die Dosiereinheit strömt. Auch ein Verklumpen des Netzmittels kann so vermieden werden.

Bei einer Einzelansteuerung der Regner, d.h. wenn jedem Regner ein separates Magnetventil zugeordnet ist, ist zumeist in jeder von einer Hauptwasserleitung abzweigenden Abzweigleitung ein Absperrschieber vorgesehen, durch welchen die Abzweigleitung von der Hauptwasserleitung abtrennbar ist. In diesem Fall ist die Dosiereinheit vorzugsweise in Strömungsrichtung hinter wenigstens einem der Absperrschieber angeordnet.

Bei einer großen zu beregnenden Fläche, von welcher nur bestimmte Bereiche mit einem Netzmittel oder dgl. beregnet werden sollen, hat es sich als günstig erwiesen, die Dosiereinheit nicht in der Hauptwasserleitung, sondern in einer oder mehreren der Abzweigleitungen anzuordnen. Damit nicht in jeder der Abzweigleitungen eine Dosiereinheit vorgesehen werden muss, kann die Dosiereinheit auch derart gestaltet sein, dass sie leicht in eine Wasserleitung integrierbar und aus dieser wieder entnehmbar ist.

Weiterbildungen, Vorteile und Anwendungsmöglichkeiten der Erfindung ergeben sich auch aus der nachfolgenden Beschreibung von Ausführungsbespielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: einen Schnitt durch eine Dosiereinheit nach einer ersten Ausführungsform der Erfindung,
- Fig. 2: die Dosiereinheit nach Figur 1 in einer anderen Dosierstellung,
- Fig. 3: eine Draufsicht auf die Dosiereinheit nach Figur 1,
- Fig. 4a - c: verschiedene Öffnungsstellungen des Dosierventils der Dosiereinheit nach Fig. 1,
- Fig. 5: die in eine Bewässerungsanlage integrierte Dosiereinheit nach Fig. 1,
- Fig. 6: einen Schnitt durch eine Dosiereinheit nach einer zweiten Ausführungsform der Erfindung,
- Fig. 7: einen Netzmittelbehälter für die Dosiereinheit nach Fig. 6, und
- Fig. 8: die in eine Bewässerungsanlage integrierte Dosiereinheit nach Fig. 6.

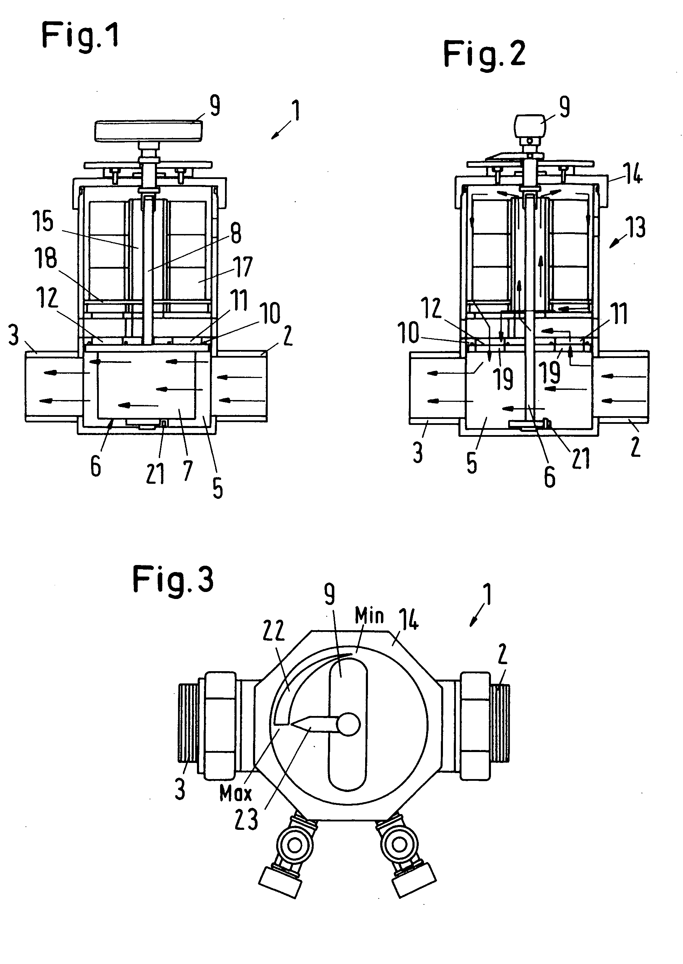

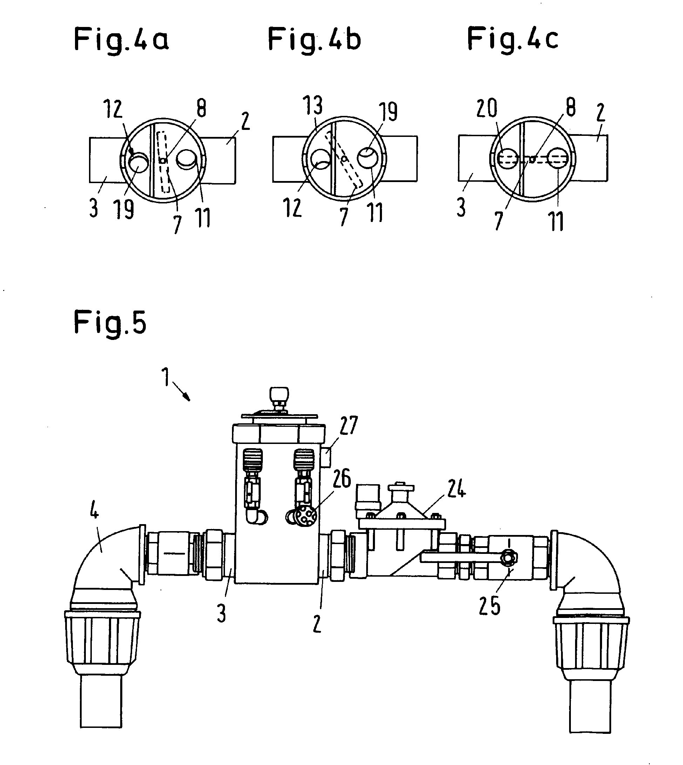

Die Dosiereinheit nach der in den Figuren 1 bis 5 dargestellten ersten Ausführungsform weist einen Einlassanschluss 2 und einen Auslassanschluss 3 auf, mit welchem die Dosiereinheit 1, wie in Figur 5 dargestellt, in eine Wasserleitung 4 integrierbar ist. Zwischen dem Einlassanschluss 2 und dem Auslassanschluss 3 verläuft durch die Dosiereinheit 1 ein Strömungskanal 5, in welchem ein Dosierventil 6 angeordnet ist.

Das Dosierventil 6 ist mit einer ersten Verschlussscheibe 7 ausgestattet, die über eine Antriebsstange 8 und einen Handgriff 9 zwischen einer einen Durchfluss durch den Strömungskanal 5 zumindest nicht wesentlich behindernden Öffnungsstellung, die in Fig. 1 dargestellt ist, und einer in Fig. 2 dargestellten Verschlussstellung verschwenkbar ist, in welcher die erste Verschlussscheibe 7 einen Durchfluss durch den Strömungskanal 5 zumindest im Wesentlichen sperrt. Die verschiedenen Positionen der ersten Verschlussscheibe 7 des Dosierventils 6 lassen sich auch den Figuren 4a bis 4c entnehmen. Dabei ist in Fig. 4a eine der Darstellungen der Fig. 2 entsprechende Verschlussstellung gezeigt, während in Fig. 4c die Öffnungsstellung gemäß Fig. 1 abgebildet ist, in welcher ein Durchfluss durch den Strömungskanal 5 ermöglicht wird.

Der Strömungskanal 5 wird nach oben hin durch eine Platte 10 abgeschlossen, in welcher zwei Öffnungen 11 bzw. 12 derart angeordnet sind, dass die erste Öffnung 11 relativ zu der ersten Verschlussscheibe 7 des Dosierventils auf der Seite des Einlassanschlusses 2 liegt, während die zweite Öffnung 12 auf der Seite des Auslassanschlusses 3 liegt. Die beiden Öffnungen 11 und 12 in der Wand 11 definieren die beiden Enden eines Bypasskanals. Dieser Bypasskanal erstreckt sich durch ein auf dem Strömungskanal 5 angeordnetes zylindrisches Gehäuse 13, welches mit einem aufschraubbaren Deckel 14 verschlossen ist. In dem Gehäuse 13 ist ein zentrales Steigrohr 15 angeordnet, welches mit der ersten Öffnung 11 in Strömungsverbindung steht. Das Steigrohr 15 ist auf seiner dem Deckel 14 zugewandten Seite offen gestaltet, so dass Wasser aus der ersten Öffnung 11 durch das Steigrohr 15 in einen ringförmigen Bereich 16 strömen kann, der durch die Innenwand des Gehäuses 13 und die Außenwand des Steigrohrs 15 definiert ist.

Dieser ringförmige Bereich bildet eine Mischkammer 16, in welcher in der dargestellten Ausführungsform mehrere ringförmige Tabletten 17 eines Netzmittels aufgenommen sind. Auf der dem Strömungskanal 5 zugewandten Seite der Mischkammer 16 ist ein Rost 18 vorgesehen, auf welchem die ringförmigen Tabletten 17 gehalten sind. Weiter steht die Mischkammer 16 über den Rost 18 mit der zweiten Öffnung 12 in Verbindung, so dass Wasser aus der Mischkammer 16, in welcher sich das Wasser mit dem Netzmittel der Tabletten 17 mischt, durch die zweite Öffnung 12 in den Strömungskanal 5 zurückgeleitet wird.

Das Dosierventil 6 weist weiter eine mit zwei Öffnungen 19 versehene zweite Verschlussscheibe 20 auf, die im Wesentlichen dichtend an der Wand 10 anliegt. Die Öffnungen 19 in der zweiten Verschlussscheibe 20 sind dabei so angeordnet, dass sie in der Verschlussstellung der ersten Verschlussscheibe 7 die beiden Öffnungen 11 und 12 in der Wand freigeben, während die zweite Verschlussscheibe 20 in der Öffnungsstellung der ersten Verschlussscheibe 7 die beiden Öffnungen 11 und 12 in der Wand 10 verschließt. Die zweite Verschlussscheibe 20 ist dabei derart mit der Antriebsstange 8 gekoppelt, dass die erste und zweite Verschlusswand gemeinsam betätigt werden können.

Am Boden des Strömungskanals 5 können Anschläge 21 vorgesehen sein, so dass das Dosierventil 6 zwischen zwei definierten Endstellungen, in welcher das Wasser entweder durch den Strömungskanal 5 oder durch den Bypasskanal geleitet wird, eingestellt werden kann. Zudem kann auf dem Deckel 14 des Gehäuses 13, wie in Fig. 3 dargestellt, eine Skalierung 22 aufgebracht sein, um mit einer Anzeigeeinrichtung 23, die an dem Handgriff 9 vorgesehen ist, die Stellung des Dosierventils ablesen und einstellen zu können.

Die Dosiereinheit 1 wird, wie in Fig. 5 dargestellt, in der Wasserleitung 4 derart positioniert, dass die Dosiereinheit stromabwärts eines zentral ansteuerbaren Magnetventils 24 bzw. eines Absperrschiebers 25 angeordnet ist. An dem Gehäuse 13 können im unteren Bereich der Mischkammer 16 ein Entleerventil 26 und im oberen Bereich der Mischkammer 16 ein Belüftungsventil 27 vorgesehen sein, so dass im drucklosen Zustand, d.h. nach Absperren des Magnetventils 24 bzw. des Absperrschiebers 25, die Mischkammer 16 leerlaufen kann, um ein Verklumpen der ringförmigen Tabletten 17 des Netzmittels zu vermeiden.

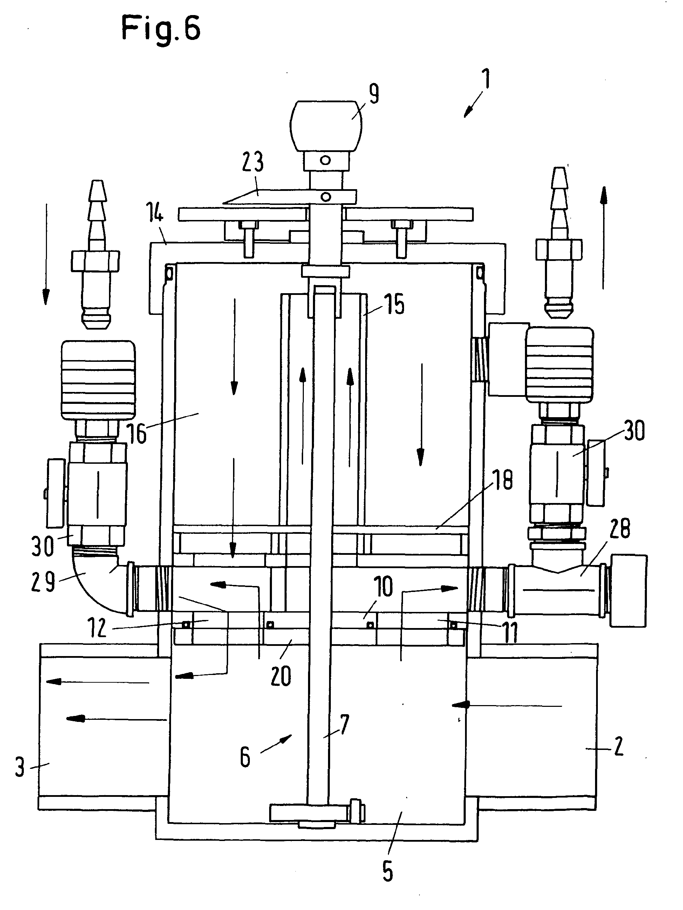

Bei der in den Figuren 6 bis 8 dargestellten zweiten Ausführungsform der Erfindung entspricht der Aufbau der Dosiereinheit 1 im Wesentlichen dem der oben beschriebenen Dosiereinheit. Um dem Wasser zusätzlich oder alternativ zu dem in Tablettenform vorliegenden Netzmittel ein fließfähiges Boden- oder Pflanzenverbesserungsmittel zuzumischen, sind zwischen dem Rost 18 und der Wand 10 zwei Abzweigstutzen 28 bzw. 29 vorgesehen, wobei der erste Abzweigstutzen 28 mit der ersten Öffnung 11 in der Wand 10 in Strömungsverbindung steht und der zweite Abzweigstutzen 29 mit der zweiten Öffnung 12 in der Wand 10 strömungsverbunden ist. Den Abzweigstutzen 28 und 29 kann ein Absperrhahn 30 zugeordnet sein.

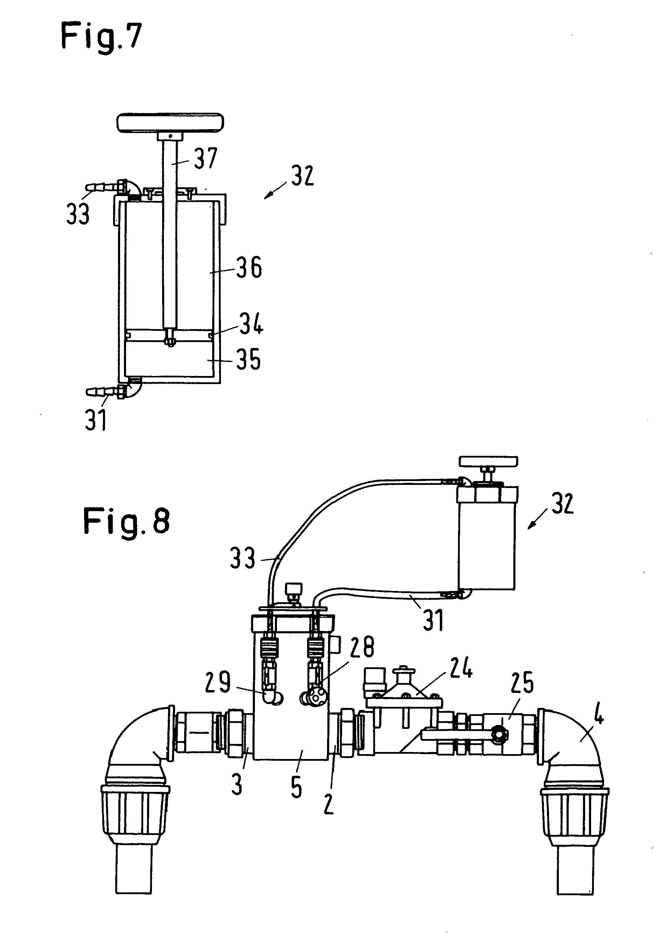

Wie aus der Darstellung der Fig. 8 ersichtlich ist, ist der erste Abzweigstutzen 28 mit einer Leitung 31 verbunden, die in einen Behälter 32 mündet. Der Behälter 32 ist weiter über eine Einspeisleitung 33 mit dem zweiten Abzweigstutzen 29 verbunden.

In dem Behälter 32 ist ein Kolben 34 verschiebbar angeordnet, der den Behälter in eine erste Kammer 35, in welche die Leitung 31 mündet, und eine zweite Kammer 36 unterteilt, aus welcher die Einspeisleitung 33 abzweigt. Dem Kolben 34 ist eine Kolbenstange 37 mit einem Handgriff zugeordnet, so dass die Kolbenfläche auf der Seite der ersten Kammer 35 größer als die auf der Seite der zweiten Kammer 36 ist. Zudem ist der Fließdruck in der Leitung 31 geringfügig höher als der Fließdruck in der Einspeisleitung 33.

Auf diese Weise wird in der in Fig. 6 dargestellten Stellung des Dosierventils Wasser über die Leitung 31 in die erste Kammer 35 des Behälters 32 gedrückt. Der Kolben 34 verschiebt sich dadurch allmählich in Fig. 7 nach oben, wodurch das fließfähige Netzmittel oder dgl., welches in der zweiten Kammer 36 des Behälters 32 aufgenommen ist, über die Einspeisleitung 33 in die Mischkammer 16 geführt wird. Dort vermischt sich das Netzmittel mit dem durch die Mischkammer 16 strömenden Wasser und gelangt in die zweite Öffnung 12 in der Wand 10 wieder in den Strömungskanal 5.

Zum Befüllen des Behälters 33 wird der Kolben 34 über die Kolbenstange 37 in Fig. 7 nach unten gedrückt, so dass das in der ersten Kammer 35 aufgenommene Wasser über die Leitung 31 zurückströmt. Die zweite Kammer 36 ist dann wieder zur Aufnahme eines fließfähigen Netzmittels oder dgl. bereit. Wenn statt der Einspeisleitung 33 an die zweite Kammer 36 ein in einen Vorratsbehälter für fließfähiges Netzmittel mündender Schlauch angeschlossen wird, kann das fließfähige Netzmittel auch direkt in die zweite Kammer 36 eingesaugt werden, während der Kolben 34 nach unten gedrückt wird.

### Bezugszeichenliste:

- 1: Dosiereinheit
- 2: Einlassanschluss
- 3: Auslassanschluss
- 4: Wasserleitung
- 5: Strömungskanal
- 6: Dosierventil
- 7: erste Verschlussscheibe
- 8: Antriebsstange
- 9: Handgriff
- 10: Wand
- 11: erste Öffnung der Wand 10
- 12: zweite Öffnung der Wand 10
- 13: Gehäuse
- 14: Deckel
- 15: Steigrohr
- 16: Mischkammer
- 17: ringförmige Netzmitteltablette
- 18: Rost
- 19: Öffnung der Verschlussscheibe
- 20: zweite Verschlussscheibe
- 21: Anschlag
- 22: Skalierung
- 23: Anzeigeelement
- 24: Magnetventil
- 25: Absperrschieber
- 26: Entleerventil
- 27: Belüftungsventil
- 28: erster Abzweigstutzen
- 29: zweiter Abzweigstutzen
- 30: Absperrhahn
- 31: Leitung
- 32: Behälter
- 33: Einspeisleitung
- 34: Kolben
- 35: erste Kammer des Behälters
- 36: zweite Kammer des Behälters
- 37: Kolbenstange

## Patentansprüche

1. Dosiereinheit für Boden- oder Pflanzenverbesserungsmittel, insbesondere für Netzmittel zur Steigerung der Wasseraufnahmefähigkeit des Bodens, mit einem ersten, mit einer Bewässerungsleitung verbindbaren Einlassanschluss, einem zweiten, mit der Bewässerungsleitung verbindbaren Auslassanschluss, einem zwischen dem Einlassanschluss und dem Auslassanschluss verlaufenden Strömungskanal und einem Bypasskanal, der in Fließrichtung von dem Strömungskanal abzweigt, in eine Mischkammer zum Zumischen eines Boden- oder Pflanzenverbesserungsmittels führt und aus dieser wieder in den Strömungskanal mündet, **dadurch gekennzeichnet, dass** in dem Strömungskanal (5) ein Dosierventil (6) vorgesehen ist, durch welches gleichzeitig die Durchflussmenge durch den Strömungskanal (5) und die Durchflussmenge durch den Bypasskanal regelbar ist.

2. Dosiereinheit nach Anspruch 1, **dadurch gekennzeichnet, dass** das Dosierventil (6) eine erste Verschlussscheibe (7) aufweist, die derart an die Innenkontur des Strömungskanals (5) angepasst ist, dass die erste Verschlussscheibe (7) durch eine Drehung um 90° aus einer einen Durchfluss durch den Strömungskanal (5) zumindest im Wesentlichen sperrenden Verschlussstellung in eine einen Durchfluss durch den Strömungskanal (5) zumindest nicht wesentlich behindernden Öffnungsstellung bzw. umgekehrt überführbar ist.

3. Dosiereinheit nach Anspruch 1 oder 2, **dadurch gekennzeichnet, dass** der Strömungskanal (5) von der Mischkammer (16) durch eine Wand (10) getrennt ist, in welcher zwei Öffnungen (11, 12) vorgesehen sind, die die beiden Enden des Bypasskanals bilden, und dass das Dosierventil (6) eine zweite Verschlussscheibe (20) aufweist, durch die wenigstens eine der beiden Öffnungen (11, 12) öffenbar und verschließbar ist.

4. Dosiereinheit nach Anspruch 3, **dadurch gekennzeichnet, dass** die erste und die zweite Verschlussscheibe (7, 20) derart miteinander gekoppelt sind, dass die zweite Verschlussscheibe (20) in der Öffnungsstellung der ersten Verschlussscheibe (7) einen Durchfluss durch den Bypasskanal zumindest im Wesentlichen sperrt und in der Verschlussstellung der ersten Verschlussscheibe (7) einen Durchfluss durch den Bypasskanal zumindest nicht wesentlich behindert.

5. Dosiereinheit nach einem der Ansprüche 1 bis 4, **dadurch gekennzeichnet, dass** die Mischkammer (16) durch ein insbesondere zylindrisches Gehäuse (13) gebildet wird, in welchem ein insbesondere zentral angeordnetes Steigrohr (15) vorgesehen ist, welches mit dem Strömungskanal (5) verbindbar ist, und das zusammen mit dem Gehäuse (13) einen ringförmigen Bereich der Mischkammer (16) definiert.

6. Dosiereinheit nach Anspruch 5, **dadurch gekennzeichnet, dass** dem Dosierventil (6) ein Betätigungselement zugeordnet ist, welches eine sich durch das Steigrohr (15) erstreckende Antriebsstange (8) aufweist.

7. Dosiereinheit nach einem der Ansprüche 1 bis 6, **dadurch gekennzeichnet, dass** das Dosierventil (6) zur manuellen Betätigung mit einem Handgriff (9) verbunden ist, dem insbesondere eine Anzeigeeinrichtung (23) und/oder eine Skalierung (22) zugeordnet ist.

8. Dosiereinheit nach einem der Ansprüche 1 bis 7, **dadurch gekennzeichnet, dass** das Dosierventil (6) zur motorischen Betätigung mit einem Motor, einem Stellglied oder dgl. verbunden ist, dem insbesondere eine Anzeigeeinrichtung (23) und/oder eine Skalierung (22) zugeordnet ist.

9. Dosiereinheit nach einem der Ansprüche 1 bis 8, **dadurch gekennzeichnet, dass** in der Mischkammer (16) ein insbesondere ringförmiger Rost (18) vorgesehen ist, auf welchen ringförmige Tabletten (17) eines Boden- oder Pflanzenverbesserungsmittels derart aufgesetzt sind, dass diese von einem durch den Bypasskanal strömenden Fluid umspült und langsam aufgelöst werden.

10. Dosiereinheit nach einem der Ansprüche 1 bis 9, **dadurch gekennzeichnet, dass** von dem Bypasskanal eine Leitung (31) abzweigt, die mit einem Behälter (32) für ein fließfähiges Boden- oder Pflanzenverbesserungsmittel derart verbunden ist, dass durch den Fluiddruck in der Leitung (31) das fließfähige Boden- oder Pflanzenverbesserungsmittel über eine Einspeisleitung (33) in den Bypasskanal eingebracht wird.

11. Dosiereinheit nach Anspruch 10, **dadurch gekennzeichnet, dass** in dem Behälter (32) ein Kolben (34) verschiebbar angeordnet ist, der den Behälter in eine erste Kammer (35), in welche die Leitung (31) mündet, und eine zweite Kammer (36), aus welcher die Einspeisleitung (33) abzweigt, unterteilt, wobei der Kolben (34) auf seiner der ersten Kammer (35) zugewandten Seite eine größere wirksame Kolbenfläche aufweist als auf seiner der zweiten Kammer (36) zugewandten Seite.

12. Dosiereinheit nach einem der Ansprüche 1 bis 11, **dadurch gekennzeichnet, dass** im vertikal unteren Bereich der Mischkammer (16) ein Entleerventil (26) und/oder im vertikal oberen Bereich der Mischkammer (16) ein Belüftungsventil (27) vorgesehen ist.

13. Dosiereinheit nach einem der Ansprüche 5 bis 11, **dadurch gekennzeichnet, dass** das Gehäuse (13) der Mischkammer (16) durch einen auf dieser insbesondere durch eine Verschraubung lösbar befestigten Deckel (14) verschlossen ist.

14. Bewässerungsanlage mit einer Wasserleitung (4) und wenigstens einem an diese angeschlossenen Regner oder dgl., dem ein insbesondere zentral ansteuerbares Ventil (24) vorgeschaltet ist, wobei in Strömungsrichtung hinter dem Ventil (24) eine Dosiereinheit (1) nach einem der Ansprüche 1 bis 13 in der Wasserleitung angeordnet ist.

15. Bewässerungsanlage nach Anspruch 14, **dadurch gekennzeichnet, dass** die Wasserleitung (4) eine Hauptwasserleitung und mehrere von dieser abzweigende Abzweigleitungen aufweist, die jeweils durch einen Absperrschieber (25) von der Hauptwasserleitung trennbar sind, und dass die Dosiereinheit (1) in Strömungsrichtung hinter wenigstens einem der Absperrschieber (25) angeordnet ist.
